# EUROPÄISCHE PATENTSCHRIFT

(11) **EP 1 416 248 B1**
(45) Veröffentlichungstag und Bekanntmachung des Hinweises auf die Patenterteilung: **06.06.2007**
(21) Anmeldenummer: 03020920.9
(22) Anmeldetag: 16.09.2003
(51) Int. Cl.: G01C 19/02

(54) **Kreiselkompass mit elektromagnetischer Halbschalentransformator-Energieübertragung und optoelektronischer Datensignalübertragung**
Gyro-compass with electromagnetic energy transmission by half-shell transformer and with optoelectronic data signal transmission
Compas gyroscopique avec transmission d'energie éléctromagnetique par un transformateur demi-coquilles et transmission des signaux de données optoélectronique

(30) Priorität: 04.11.2002 DE 20217059 U
(43) Veröffentlichungstag der Anmeldung: 06.05.2004
(73) Patentinhaber: Raytheon Anschütz GmbH, 24106 Kiel (DE)
(72) Erfinder: Skerka, Wolfgang, 24768 Rendsburg (DE); Bey, Ulf, 24625 Grossharrie (DE); Bast, Werner, 24106 Kiel (DE)
(74) Vertreter: Baumann, Eduard K.

(56) Entgegenhaltungen:
- DE-A1- 10 102 278
- DE-A1- 19 921 734
- GB-A- 2 042 724
- US-A- 3 330 242

## Beschreibung

Die Erfindung betrifft einen Kompass mit elektromagnetischer Halbschalentransformator-Energieübertragungseinrichtung und optoelektronischer Datensignalübertragung.

Für die Energie- und Signalübertragung an Kreiselkompassen sind optoelektronische Übertragungsstrecken, wie sie beispielsweise in der DE 101 02 278 A1 der Anmelderin vorgeschlagen werden, bekannt. Dort wird allerdings vorgeschlagen, wie auch im gesamten übrigen bekannten Stand der Technik, die Versorgungsspannung über eine Schleifringverbindung zuzuführen. Die Nachteile, die Schleifringverbindungen insbesondere hinsichtlich langer Standzeiten mit sich bringen, sind bekannt.

Eine schleifringlose Übertragung von Energie für andere Anwendungen ist weiter beispielsweise schon in der DE 199 21 734 A1 beschrieben, wobei eine Transverterschaltung an der Primärseite eingesetzt ist, die mit einer Modulatorschaltung verbunden ist. Über die Art der Ansteuerung oder Taktfrequenzen und Betriebsspannungen werden dort jedoch keine näheren Angaben gemacht.

Der Erfindung liegt nun die Aufgabe zugrunde, die Nachteile einer Schleifringverbindung zu vermeiden und auch die Versorgungsspannung schleifringlos zu übertragen, wobei die bei einem Kompass zur Verfügung zu stellenden, teilweise galvanisch getrennten, verschiedenen Versorgungsspannungen für Heizung, Kreishugelantrieb und Elektronikversorgung im frei beweglichen Teil zur Verfügung gestellt werden sollen. Das heißt, neben der Versorgungsspannung für die Heizung in der üblichen Spannung 24 V ist auch für die Kreiskugel-Versorgung eine Spannung von 55 V mit 400 Hz für den Antrieb bereitzustellen, an deren Gleicllförmigkeit hohe Anforderungen zu stellen sind, sowie in der bewegten Einheit auch 6 Volt für die Spannungsversorgung der dort vorhandenen Elektronik bereitzustellen.

Erfindungsgemäß wird dies durch die Merkmale des unabhängigen Anspruchs 1 gelöst. Die abhängigen Ansprüche geben vorteilhafte Ausführungsformen wieder.

Besonders vorteilhaft ist dabei die Verwendung eines in einer H-Brücke erzeugten, 100 %-ig energiesymmetrischen Rechtecksignales beider Polaritäten, das an die Primärspule(n) zur Vermeidung magnetischer Verluste durch Gleichspannungsanteile und zur Vermeidung der Beeinflussung des nicht fern liegenden Kreisels des Kompasses gegeben wird.

Dabei wird eine hochpräzise mit "Bootstrap-Loadern und konventionellen Treiber versehene H-Brückenschaltung zur magnetisch rückwirkungsfreien Speisung des Halbschalentransformators von einer Regelungseinheit mit stets einander gleichen und symmetrischen Amplitudenflächen konstant gehalten. Dies wird mit einem Mikroprozessor erreicht, der die H-Brückenschaltung entsprechend den Leistungsanfor-derungen des Systems überwacht und ansteuert Dabei werden erhöhte Leistungsanforderungen durch ein Anheben der Einspeisespannung nachgeregelt.

Durch den auf diese Weise erreichten Wirkungsgrad von 96 % wird insbesondere auch die Umfeldmagnetisierung gegen Null gehen, und es läßt sich ein Stabilisierungsumfang von 10 % und besser realisieren.

Weitere Vorteile und Merkmale der Erfindung ergeben sich aus nachfolgender Beschreibung eines bevorzugten Ausführungsbeispiels anhand der beigefügtenschematischen Zeichnung. Dabei zeigt:
- Fig. 1: schematisch die Komponenten des Übertragungssystems und
- Fig. 2: eine schematische Darstellung des Kompassaufbaus.

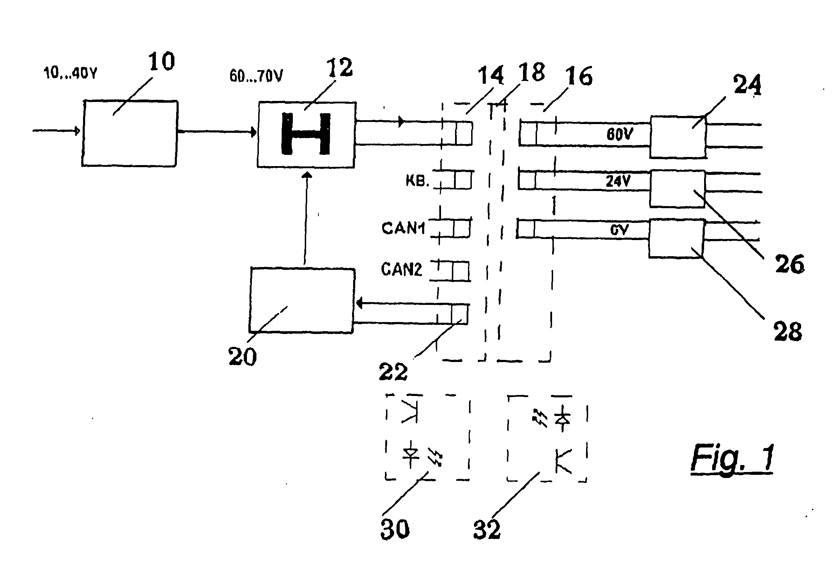

Die in der **Fig. 1** dargestellten Komponenten beinhalten dabei insbesondere eine stabile. Spannungsversorgung **10** die bei ca. 10 bis 40 V Betriebsspannung ausgangsseitig ca. 60 bis 70 V Gleichstrom bietet und eine hochpräzise H-Brückenschaltung (komplementäre Leismngstrarisistoren, die bei gepulster Ansteuerung ausgangsseitig eine einstellbare Spannung durch entsprechende Kondensatoren schaffen), die als der Komponente **12** verdeutlicht ist.

Von dieser Komponente **12** wird der Halbschalentransistor, der durch die beiden gestrichelten Kästen **14, 16** angedeutet ist und zwischen denen ein Luftspalt **18** verbleibt, magnetisch rückwirkungsfrei gespeist. Dabei wird eine 100 %-ige Energiesymmetrie im Rechtecksignalverhältnis beider Polaritäten zur Vermeidung magnetischer Verluste gewährleistet.

In dem weiter auf der Eingangsseite dargestellten Modul **20** wird mit einem Mikroprozessor entsprechend den erzeugten Signalen, insbesondere unter Berücksichtigung der Flankensteilheit, die H-Brückenschaltung **12** geregelt und überwacht. Der Sensor für diese Regelung ist in der Eingangshalbschale mit Bezugszeichen **22** angedeutet. Er besitzt eigene Abgriffe an einer der Primärspulenwicklungen.

In der Ausgangshalbschale sind nun mit Bezugszeichen **24, 26** und **28** einzelne Spulen (deren Wicklungen bifilar miteinander verdreht sind) für den Abgriff sowohl einer 50 bis 60 V-Spannung, einer 24 V-Spannung für die Heizung und einer 6 V-Spannung für die Elektronikversorgung der Sekundärseite und die Pumpenversorgung vorgesehen. Die letztere 6 V-Spannung wird dabei in einer bevorzugten Ausführung auch auf der Primärseite des Halbschalentransformators durch Abgriff geeigneter Wicklungen als Versorgungsspanung für die verschiedenen Ausgangsschnittstellen des Kompasses (Kursbus, externer (Ausgangs-) CAN-Bus 1 + 2) bei galvanischer Trennung genutzt.

Eine interne CAN-Bus-Schnittstelle, die als optoelektronische Schnittstelle zwischen den Komponenten **30** und **32** im unteren Teil der Darstellung schematisch angedeutet ist, bildet dabei die optoelektronische Schnittstelle des Übertragungssystems und dient insbesondere zur Übertragung der Signalinformationen aus dem Kompass über die Höbenlage, den Leitwert und die Temperatur.

Es wird vorgeschlagen Halbschalentransformatoren mit einem Außendurchmesser von 69 mm und einem Innendurchmesser von 22 mm zu verwenden, zwischen denen ein Luftspalt von 1 mm bei einer Röhe je Halbschale von 14 mm vorgesehen ist. Dabei wird als Material für die Halbschalen Ferromaterial N 22 vorgesehen und die jeweils vorgesehene Mehrzahl von Spulen wird dabei auf Kunststoffkerne gewickelt. Bei einer leistungsübemagung von150 W ergibt sich ein Wirkungsgrad von ca. 96 % bei einer Umfeldmagnetisierung gegen Null.

Als Taktfrequenz wird 30 KHz gewählt und ein Taktverhältnis von 1.1 mit 100 %er Symmetrie. Der Stabilisierungsumfang wird dabei 10 % betragen und Primär- und Sekundärmodul der Halbschalen sind sowohl im wie auch gegen den Uhrzeigersinn beliebig verdrehbar.

Die Ausgangsspannung eines Halbschalentrafo wird nicht geregelt, sondern vielmehr wird abhängig von verschiedenen Leistungsanforderungen mittels eines Mikroprozessormoduls eine hochstabilisierte EingangsqueUspannung für die H-Brücke (nicht mehr als - 20%)geregelt. Damit wird sichergestellt, dass der Halbschalentrafo auf der Encoderachse des Kompasses ohne Streufeld arbeitet.

Im Detail steuert die H-Brücke **12** die Induktivität mit sehr genauem Spannungspulshälften aus einer hochstabilisierten Quelle an. Die Frequenz und das Tastverhältnis (exakt 50 % zur Erreichung der Symmetrie) werden auch bei Lastschwankungen konstant gehalten, so dass eine Regelung dieser nicht notwendig wird.

Dabei werden die beiden H-Brückenhälften symmetrisch angesteuert und in einer definierten Ausräumverzögerung werden die MOSFET Transistoren der H-Brücke derart angesteuert, dass die Restenergie aus den Induktivitäten und den parasitären Kapazitäten die Hälften "ausräumt". Das heißt, daß die nicht unerheblichen Restladungen der Schaltung direkt im Umschaltpunkt in die Speisung zurückgeführt sind, so daß der Wirkungsgrad höher und die Quellspannung weniger stark pulsbelastet sind.

Erst durch dieses saubere Ausräumen der Restenergie der H-Brückenschaltung **12** wird ein flankensteilheitsoptimiertes Ansteuern der Induktivität ermöglicht, das die gewünschten Rechtecksignale hoher Schärfe bietet, die sich klar gegeneinander -ohne Gleichspannungsanteil - aufheben lassen.

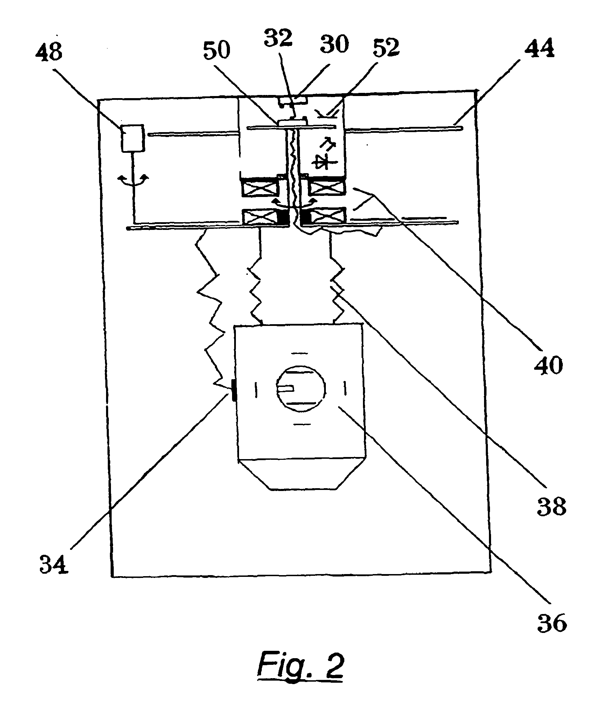

In **Fig. 2** wird die über einen Schrittmotor **48** mit Riemenantrieb angetriebene **nur** schematisch angedeutete Graycode-Scheibe **50** an der die eine Seite der Halbschalen-Energieübertrager **40** angesetzt ist dargestellt. Dieser Encoder liefert die Winkelstellung zur Nachfuhrung. Oberhalb ist die interne CAN-Bus-Schnittstelle mit den Komponenten **30** und **32** angedeutet und eine optische Abtastung **52** der Graycode-Scheibe 50, im unteren Bereich die an einem Pendelgelenk hängende Hüllkugel **36** mit Tragflüssigkeit. Pumpe und Heizung sowie der rotierenden, ihre Lage beibehaltenden Kreiselkugel. Der Kursabgriff der Kugel erfolgt hochfrequent bei ca. 50kHz. Bezugszeichen **34** bezeichnet eine Verbindung für sämtliche Versorgungs-, Steuer- und Signalleitungen.

Der erfindungsgemäße Kompass mit elektromagnetischer Halbschalentransformator-Energieübertragung **40** und optoelektronischer Datenübertragung **30, 32** zeichnet sich durch die wenigstens eine Wicklung an der primären Halbschale aus, die über eine H-Brückenschaltung **12** mit einer regelbaren Eingangsspannunrsquelle **10** verbunden ist, wobei wenigstens eine mit einer Mehrzahl von Abgriffen **24, 26, 28** für alle zur Erhaltung der Funktionen notwendigen Spannungen u.a. für die Spannungsversorgung der Heizung, der Elektronik und der Kreiskugel-Motorversorgung versehene sekundäre Wicklung an der anderen Halbschalenspule vorgesehen ist. Dabei werden eine Mehrzahl bifilar miteinander verdrillter Spulenwicklungen mit unterschiedlicher Windungszahl an wenigstens der sekundären Halbscbalenspule vorgesehen. Auf der Eingangsseite wird in einer bevorzugten Ausführung eine Regelungseinrichtung der Spannungshöhe der Eingangsspannungsquelle **10** aufgrund erhöhten Energiebedarfs an der Sekundärseite zum Empfang von Steuerdaten mit der optischen Signalübertragungsstrecke **30, 32** verbunden.

Eine zweite Regelungeinrichtung **20** der Amplitudenflächen des von der H-Brückenschaltung **12** erzeugten Rechtecksignals dagegen wird zur Vermeidung von magnetischen Verlusten auf der Primärseite insbesondere bei ungleichen Flankensteigungen zur Übermittlung von Korrektursteuerdaten an die H-Brückenschaltung mit einem Sensor **22** zur Erfassung der erzeugten Rechtecksignale an (einer) der Primarwicklung(en) vorgesehen und steht mit den Treibern der Transistoren der H-Brückenschaltung **12** in Kontakt Die H-Brücke besteht im übrigen aus MOSFET Transistoren mit - vorzugsweise Bootstrap-Loadern.

## Patentansprüche

1. Kompass mit elektromagnetischer Halbschalentransformator-Energieübertragung und optoelektronischer Datenübertragung,
**dadurch gekennzeichnet, dass**
bei dem Halbschalentransformator (14, 16) die wenigstens eine Wicklung an der primären Halbschale über eine H-Brückenschaltung (12) mit einer regelbaren Eingangsspannungsquelle (10) verbunden ist, und wenigstens eine mit einer Mehrzahl von Abgriffen für die Spannungsversorgung, u. a. der Heizung, der die Spannungsversorgung steuernden internen Elektronik und der Kreiskugel-Motorversorgung, versehene sekundäre Wicklung an der anderen Halbschalenspule vorgesehen ist.

2. Kompass nach Anspruch 1, **gekennzeichnet durch** eine Mehrzahl bifilar miteinander verdrillter Spulenwicklungen mit unterschiedlicher Windungszahl an wenigstens der sekundären Halbschalenspule.

3. Kompass nach Anspruch 1 oder 2, **dadurch gekennzeichnet, dass** die Regelungseinrichtung der Spannungshöhe der Eingangsspannungsquelle (10) aufgrund erhöhten Energiebedarfs an der Sekundärseite zum Empfang von Steuerdaten mit der optischen Signalübertragungsstrecke (30, 32) verbunden ist.

4. Kompass nach einem der vorangehenden Ansprüche, **dadurch gekennzeichnet, dass** die Regelungseinrichtung (20) der Amplitudenflächen des von der H-Brückenschaltung (12) erzeugten Rechtecksignals zur Vermeidung von magnetischen Verlusten auf der Primärseite insbesondere bei ungleichen Flankensteigungen zur Übermittlung von Korrektursteuerdaten an die H-Brückenschaltung mit einem Sensor (22) zur Erfassung der erzeugten Rechtecksignale an (einer) der Primärwicklung(en) versehen ist, und mit den Treibern der Transistoren der H-Brückenschaltung in Kontakt steht.

5. Kompass nach einem der vorangehenden Ansprüche, **dadurch gekennzeichnet, dass** die H-Brücke aus MOSFET-Transistoren mit Bootstrap-Loadern versehen ist.

6. Kompass nach einem der vorangehenden Ansprüche, **dadurch gekennzeichnet, dass** ein Encoder am Halbschalentrafo zur Erfassung der Winkelstellung vorgesehen ist.

## Claims

1. A compass with electromagnetic half-shell transformer energy transmission and optoelectronic data transmission,
**characterized in that**
in the half-shell transformer (14, 16) the at least one winding on the primary half-shell is connected via an H-bridge circuit (12) to a controllable input voltage source (10), and at least one secondary winding is provided on the other half-shell coil, which secondary winding is provided with a plurality of taps for the voltage supply of, among other things, the heating, the internal electronics controlling the voltage supply, and the gyrosphere motor supply.

2. The compass according to claim 1, **characterized by** a plurality of intertwined bifilar coil windings with a different number of windings at least on the secondary half-shell coil.

3. The compass according to claim 1 or 2, **characterized in that** due to an increased energy requirement at the secondary side, the control device of the voltage level of the input voltage source (10) is connected to the optical signal transmission path (30, 32) to receive control data.

4. The compass according to any of the preceding claims, **characterized in that** the control device (20) of the amplitude areas of the rectangular signal generated by the H-bridge circuit (12) is provided with a sensor (22) for detecting the generated rectangular signals at (one of) the primary windings(s) to avoid magnetic losses on the primary side, especially if there are unequal flank slopes, for the transmission of corrective control data to the H-bridge circuit, and the control device (20) is in contact with the transistors of the H-bridge circuit.

5. The compass according to any of the preceding claims, **characterized in that** the H-bridge is provided with MOSFET transistors with bootstrap loaders.

6. The compass according to any one of the preceding claims, **characterized in that** an encoder is provided on the half-shell transformer for detecting the angular position.

## Revendications

1. Compas avec transmission d'énergie électromagnétique par transformateur demi-coquilles et transmission de données optoélectronique,
**caractérisé en ce que**
sur le transformateur demi-coquilles (14, 16) l'au moins un enroulement est relié à une source de tension d'entrée (10) réglable sur la demi-coquille primaire par l'intermédiaire d'un circuit en pont en H (12) et qu'au moins un enroulement secondaire pourvu d'une pluralité de prises d'alimentation en tension, entre autres du chauffage, de l'électronique interne commandant l'alimentation en tension et de l'alimentation du moteur de la boule, est prévu sur l'autre bobine de demi-coquille.

2. Compas selon la revendication 1, **caractérisé par** une pluralité d'enroulements de bobines bifilaires commis ensemble avec différents nombres de spires sur au moins la bobine de la demi-coquille secondaire.

3. Compas selon la revendication 1 ou 2, **caractérisé en ce que**, en raison du besoin accru d'énergie sur le côté secondaire, le mécanisme de réglage de l'intensité de la tension de la source de tension d'entrée (10) est relié à la voie de transmission de signaux optiques (30, 32) pour recevoir des données de commande.

4. Compas selon l'une quelconque des revendications précédentes, **caractérisé en ce que** le mécanisme de réglage (20) des surfaces d'amplitudes du signal rectangulaire généré par le circuit en pont en H (12) est pourvu d'un capteur (22) de détection des signaux rectangulaires générés sur (l'un des) l'enroulement(s) primaire(s) pour éviter des pertes magnétiques sur le côté primaire, notamment en cas de raideurs de flanc inégales en vue de transmettre des données de commande correctrice au circuit en pont en H et est en contact avec les circuits d'attaque des transistors du circuit en pont en H.

5. Compas selon l'une quelconque des revendications précédentes, **caractérisé en ce que** le pont en H est muni de transistors MOSFET avec des chargeurs Bootstrap.

6. Compas selon l'une quelconque des revendications précédentes, **caractérisé en ce qu'**un encodeur est prévu sur le transformateur demi-coquille pour détecter la position angulaire.
